# EUROPEAN PATENT APPLICATION

(11) **EP 4 091 687 A1**
(43) Date of publication of application: **23.11.2022**
(21) Application number: 21174587.2
(22) Date of filing: 19.05.2021
(51) Int. Cl.: B01D 1/26, B01D 1/28, C02F 1/04

(54) **COMPOUND TURBINE SYSTEM**

(71) Applicant: Aquafair AB, 702 18 Örebro (SE)
(72) Inventor: ÅHRSTRÖM, Bert-Olof, Örnsköldsvik (SE); CARLMAN, Fredrik, Örebro (SE)
(74) Representative: Bjerkén Hynell KB

(57) **Abstract**

A compound turbine system, comprising a pressure-tight enclosure (2) provided with a first end (4) and a second end (6), the enclosure has an essentially circular cylindrical elongated shape along a longitudinal axis A, and being essentially horizontally oriented during operation of the system, and a central tube (12) having an essentially circular crosssection and running within said enclosure (2) along said longitudinal axis A and configured to allow gaseous compounds to flow from the second end to the first end of the compound turbine system. The compound turbine system further comprises:
- an inner central tube (36) arranged concentrically within said central tube (12) and running from said second end (6) towards the first end (4) to a predetermined position P. The inner central tube (36) has an outer diameter related to the inner diameter of said central tube (12) such that a gaseous compounds conducting space (38) is provided between an outer surface of the inner central tube (36) and an inner surface of the central tube (12). A turbine assembly (14) is arranged in relation to said first end (4), comprising a turbine provided with axial turbine vane members (22) arranged within said central tube (12) and partly within said inner central tube (36) and structured to provide gaseous compounds to flow in an axial direction along the longitudinal axis A within said gaseous compounds conducting space (38), said inner central tube (36), and said central tube (12), from said second end (6) to said first end (4), and that the turbine assembly (14) comprises a motor (20) for rotating said turbine at a variable rotational speed and thereby provide said flow. The flow within the gaseous compounds conducting space (38) and the flow within the central tube are combined into one flow at said predetermined position P.

## Description

### Technical field

The present disclosure relates to a compound turbine system, more specifically, to a system directed to a dual tube turbine system, e.g. applicable in a mechanical vapor recompression (MVR) liquid purification system, and in particular, in an MVR water desalination system.

### Background

Mechanical Vapor Recompression (MVR) is an evaporation method by which a blower, compressor, or jet ejector is used to compress, and resulting from the compression, increases the pressure, density and temperature of the vapor produced.
As a result, the vapor can serve as the heating medium for its "mother" liquid or solution being concentrated. Without the compression, the vapor would be at the same temperature as its "mother" liquid/solution, and no heat transfer could take place.
The efficiency and feasibility of this process depend on the efficiency of the compressing device (e.g., blower, compressor) and the heat transfer coefficient attained in the heat exchanger contacting the condensing vapor and the boiling "mother" solution/liquid.

Presently used MVR systems suffer from a relatively high energy-consumption.

Below some patent documents within the technical field of MVR will be briefly discussed. US 10046249 disclose a compact mechanical vapor recompression evaporator system for e.g. wastewater treatment. The system has a concentric design with an inner channel and a radial MVR device at the channel end, which increases the temperature of the vapor. CN103272395A discloses an MVR system with three evaporation compartments connected in series inside an enclosure. The evaporation compartments have circular shape and have horizontal tubes running along its interior. In addition, there is a steam collector partly surrounded by the tube bundle inside the evaporation compartments. The compressor is positioned outside the enclosure.
WO2019020605A1 discloses a unit for desalination of water having three serially connected evaporator-condensers and a compressor.

DE2928392 relates to a seawater desalination by descending film evaporation and vapor compression in common horizontal tank.
US2016158666 discloses methods for thermal distillation with mechanical vapor compression.
DE102006056820 relates to a seawater desalination plant comprising a mechanical flow compressor made of radial carbon-fiber-reinforced wheel, a wheel-attachment and housing comprising the wheel.
US3868308 discloses a multiple effect evaporator for use in the distillation of liquids, in general, e.g. for desalination, and of the kind wherein evaporation takes place on the outside of substantially horizontal heat exchange tubes as a result of the heating of the inside of the tubes.

The following documents particularly relate to the turbine, or compressor part, of the system.
US20120189431A1 discloses a compressor arrangement having an axial compressor and a radial compressor that are arranged axially one behind the other.
WO200943487A1 discloses a multi-stage supercharging group having an axial turbine and a radial turbine with a concentric bypass inlet.
US20070204615A1 discloses a two-shaft turbocharger with an axial compressor and a radial compressor, wherein the radial turbine direct airflow axially toward a first turbine wheel.

When designing an MVR system, it is essential that it consumes less energy than presently used systems, and that it is robust, easy to operate and maintain. To achieve that, it is essential that the MVR system comprises a high efficiency turbine assembly to provide the flow of steam within the enclosure of the system and thus to achieve an improved MVR system consuming less energy than the presently used system.
Thus, the object of the present invention is to achieve an improved turbine assembly that in particular is applicable for use in an MVR water desalination system.

### Summary

The above-mentioned object is achieved by the present invention according to the independent claim.

Preferred embodiments are set forth in the dependent claims.

The compound turbine system according to the present invention is advantageous, in that the mechanical and structural integrity of the system will improve, due to circular symmetry, and also the thermal efficiency due to complex turbine design and advantageous material conductivity. Furthermore and most prominently; the double-tube concentric arrangement of the tubes allows the recuperation of not only the remaining heat, but also, according to one embodiment, the remaining kinetic energy of highly pressurized residual flow of steam exiting an horizontal pipe arrangement, through compartment in the compounded low pressure/high pressure axial turbine arrangement. The super-heated steam recuperation, via the conducting space, will furthermore facilitate a positive heat transfer to the low vacuum generated vapor emanating from a compartment through the inner central tube, and thereby an extra level of redundancy against water droplet condensation and impact damage on the sensitive, long radius, low pressure turbine blades in the low pressure region of the turbine. By deliberately choosing to lead the low pressure steam inside the inner central tube, surrounded by the highly pressurized residual steam, the inner central tube may still be manufactured in a slender and weight optimized way since it only receives hydrostatic pressure on the outside (the strongest load-carrying configuration of a circular pipe).

The present invention also relates to an MVR system comprising the compound turbine system. According to one embodiment, the MVR system comprises e.g. three evaporation compartments (E1-E3) provided with horizontal pipes arranged within the enclosure. The number of horizontal pipes is preferably highest in the first compartment E1 and is then gradually fewer in the two other compartments in order to retain pressure and temperature even though constant loss of mass due to condensation. The central tube runs along the longitudinal axis of the enclosure, through the centers of three evaporation compartments. Further, a velocity- and pressure compounded, axial and radial turbine assembly, arranged in one end of the central tube, both compresses and changes the direction of the steam running along the tube, thereby increasing the pressure, density and temperature of the steam. The steam is then lead through the horizontal pipes.

An important technical feature that contributes to the low energy consumption, but also to the small footprint and excellent scalability of the system, is the symmetrical arrangement of the central tube, the compact turbine and the arrangement of the horizontal pipes, with regard to the longitudinal axis.

### Brief description of the drawings

Figure 1 is a schematic illustration of a compound turbine system disclosed herein.
Figure 2 is a schematic illustration of part of an embodiment of the compound turbine system according to the present invention.
Figure 3 is a schematic illustration of an MVR system comprising a compound turbine system according to the present invention.
Figure 4 is a schematic illustration of part of an embodiment of the compound turbine system according to the present invention.
Figure 5 is a schematic cross-sectional view of the embodiment shown in figure 4.

### Detailed description

The compound turbine system will now be described in detail with references to the appended figures. Throughout the figures, the same, or similar, items have the same reference signs. Moreover, the items and the figures are not necessarily to scale, emphasis instead being placed upon illustrating the principles of the invention.

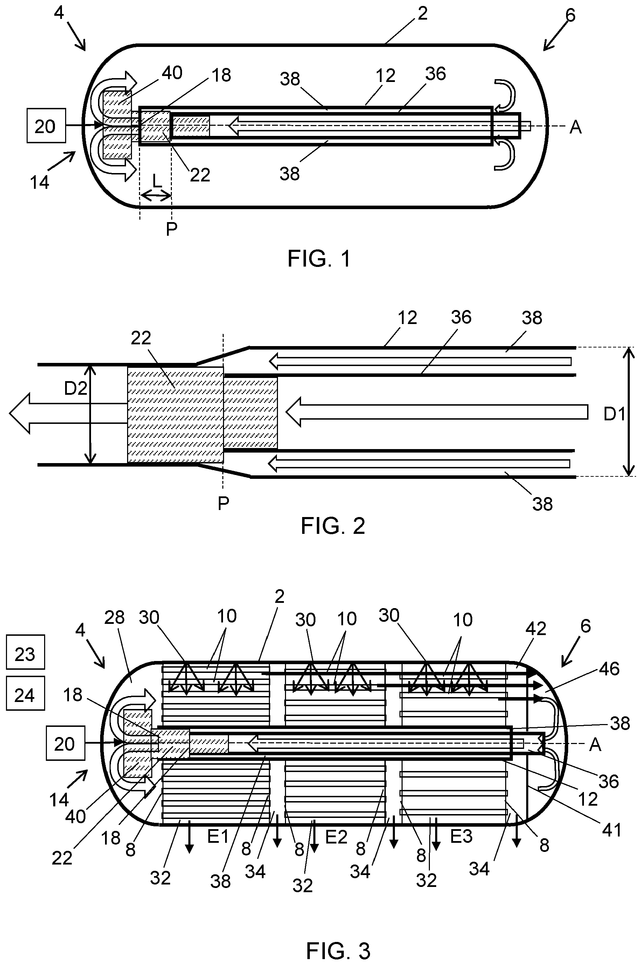

First with references to figure 1, the compound turbine system comprises a pressure-tight enclosure 2 provided with a first end 4, and a second end 6. The enclosure has an essentially circular cylindrical elongated shape along a longitudinal axis A, and being essentially horizontally oriented during operation of the system.
The compound turbine system further comprises a central tube 12 having an essentially circular cross-section and running within the enclosure 2 along the longitudinal axis A, and is configured to allow gaseous compounds to flow from the second end to the first end of the compound turbine system. In the figures, the flow of gaseous compounds is illustrated by block arrows.

The compound turbine system further comprises an inner central tube 36 arranged concentrically within the central tube 12 and running from the second end 6 towards the first end 4 to a predetermined position P a predetermined distance L from an opening 18 of the central tube 12 at the first end 4. Optionally, the predetermined distance L may be chosen in relation to the total length of the central tube 12, or as a discrete distance unrelated to the length of said central tube.
The inner central tube 36 has an outer diameter related to the inner diameter of the central tube 12 such that a gaseous compounds conducting space 38 is provided between an outer surface of the inner central tube 36 and an inner surface of the central tube 12. The space 38 has a predetermined size in a radial direction of approximately 0.05-0.25 times the outer radius of the central tube 12.

Furthermore, the compound turbine system also comprises a turbine assembly 14 arranged in relation to the first end 4, comprising a turbine provided with axial turbine vane members 22 arranged within the central tube 12 and partly within the inner central tube 36. The turbine, with its axial turbine vane members, is structured to provide gaseous compounds to flow in an axial direction along the longitudinal axis A within the gaseous compounds conducting space 38, the inner central tube 36, and the central tube 12, from the second end 6 to the first end 4. The flow within the gaseous compounds conducting space 38 and the flow within the central tube are combined into one flow at the predetermined position P of the central tube 12.

The turbine assembly 14 also comprises a motor 20 for rotating the turbine at a variable rotational speed and thereby provide the flow. An arrow pointing from the motor 20 to the turbine schematically illustrates the rotatable movement applied to the turbine. Preferably, a gearbox and a coupling device are arranged between the motor 20 and the turbine. In an exemplary variation, the motor 20 is an electrical motor provided with the gearbox and the coupling device. A bearing and a magnetic disc are arranged in connection with the enclosure adapted to transfer the rotational movement from the motor to the turbine within the enclosure. The bearings provided in relation to the present invention may e.g. be of a rolling element-, hybrid-, hydrostatic-, sliding-, magnetic type or combinations thereof and are designed to become lubricated with the air/steam/gas/gaseous compounds flow through the central tube.

According to one embodiment, the axial turbine vane members 22 comprise two types of vane members, a first type arranged within the central tube 12 but not within the inner central tube 36, and a second type arranged within the inner central tube 36.
The first type of axial turbine vane members 22 have a larger radial extension in comparison to the radial extension of vane members of the second type.

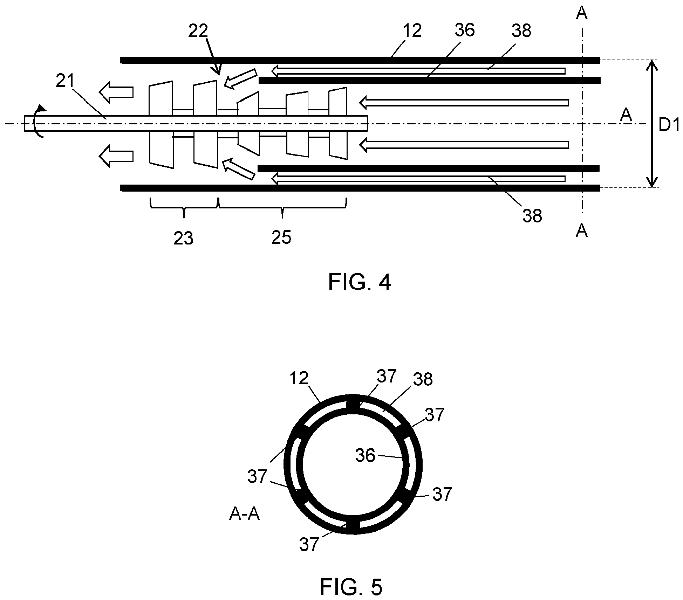

In a further embodiment, the outer diameter of the central tube 12 is essentially constant along the central tube between the first and second ends. This embodiment is schematically illustrated in figure 1, and more in detail in figures 4 and 5.

Figure 4 is a schematic illustration along the longitudinal axis A. The axil turbine vane members 22 are mounted on an axis 21 driven by the motor 20 and comprises high-pressure vane members 23 having larger outer radial extensions than the low-pressure vane members 25 being arranged within the inner central tube. The reason is to compensate for the increased mass flow where the flow from the gaseous compounds conducting space 38 is added to the flow from the interior of the inner central tube 36. In relation to the rotatable high-pressure vane members 23 and low-pressure vane members are also provided fixed stator members extending inwardly from the respective inner surface walls of the central tube 12, and the inner central tube 36, respectively. These fixed stator members are not shown in the figure, however; the individual vane pitch-angles (both rotary and stationary) are varying in each step in order to produce an optimally efficient compression, to the local and factual mass flow, regardless of vane radial extension.
Figure 5 is a schematic illustration of a cross-sectional view along A-A in figure 4. In figure 5 is shown inwardly extending splines 37 arranged at the inner surface of the central tube 12 to position the inner central tube 36 symmetrically within the central tube 12 in order to provide the conducting space 38.

According to another embodiment, schematically illustrated in figure 2, the outer diameter of the central tube 12 has a first diameter D1 at the second end 6, and a second diameter D2 at the first end 4, wherein D1>D2. The diameter decreases gradually from D1 to D2, preferably in a longitudinal section including the position P where the inner central tube 36 ends.

In still another embodiment, the predetermined position P is determined in dependence of the pressures of the flows in the inner central tube 36 and in the conducting space 38 such that the pressures are essentially equal, i.e. the pressures should differ less than 10%.
The hot gasses (containing both residual heat, increased density and kinetic energy) within the conducting space 38 are lead into the axial part of the turbine at or around the position P. This "low-pressure bypass" is essential to reinvest waste energy and thereby to increase overall system efficiency.

According to another embodiment, which is illustrated by figure 1 the turbine is also provided with radial turbine vane members 40 structured to provide gaseous compounds to flow in essentially radial directions from the opening 18 at the first end 4 of the central tube 12. Block arrows illustrate that flow.
Preferably, the radial turbine vane members 40 are concentrically arranged at the longitudinal axis A, in close relation to the opening of the central tube 12 at the first end 4.

The turbine, including both the axial turbine vane members 22 and the radial turbine vane members, is rotated by the motor 20 by means of the axis 21 (see figure 4), and these vane members are configured to rotate by the same rotational speed.

The present invention is particularly applicable for liquid purification purposes. In the following, embodiments will be described with references to figure 3, and being related to apply the compound turbine system for liquid purification. Parts of the compound turbine system illustrated in figure 3 have already been discussed above with references to figures 1 and 2, and will therefore not be discussed again in order to avoid unnecessary repetition.

In one embodiment the compound turbine system comprises numerous, particularly three, evaporation compartments E1-E3, arranged within the enclosure 2 along the longitudinal axis A. The first evaporation compartment E1 is arranged in relation to the first end 4 of the enclosure and the last evaporation compartment E3 is arranged in relation the second end 6 of the enclosure. The evaporation compartments are connected in series and have essentially circular cylindrical shapes. Each evaporation compartment comprises of two essentially planar and circular sidewalls 8, and each evaporation compartment is provided with a plurality of longitudinal pipes 10 running from one sidewall 8 to the other sidewall 8, and that the circular sidewalls are provided with openings for the plurality of pipes. The central tube 12, provided with the inner central tube 36, is arranged to run along the longitudinal axis A of the enclosure 2, through the centers of the evaporation compartments E1-E3, and configured to allow steam to flow from the second end to the first end of the enclosure. Nozzles 30 are provided in the evaporation compartments to spray the liquid into the compartment.
Advantageously, the compound turbine further comprises a low vacuum generating member 23 arranged to generate partial vacuum in the evaporation compartments, and a control unit 24 configured to control operation of the system according to designated performance.
The control may be achieved by performing a control procedure adapted to:
- generate the partial vacuum in the evaporation compartments,
- control the motor 20 to operate the turbine at a rotational speed such that an increased temperature is induced to the steam when passing the turbine to achieve desired recycling of specific heat associated to vaporization, and
- control a plurality of valves and pumps provided to supply the system with inlet water and to receive purified liquid, e.g. water, from the system.

In a further embodiment, the number of pipes 10 is highest in the first evaporation compartment E1, then gradually fewer in the second E2 and third E3. The pipes 10 are essentially evenly spread in a cross-section perpendicular to the longitudinal axis of the respective evaporation compartment, and the pipes are configured to allow steam to flow from the first end 4 to the second end 6 of the enclosure 2.

Furthermore, a first end space 28 is provided, defined by the sidewall 8 of the first evaporation compartment E1 and the inner surface of the enclosure 2. The first end inner surface has a symmetrical concave shape displaying a predetermined curve-form adapted to guide the steam flow in a radial direction and further into a direction essentially along the longitudinal axis A towards the second end 6 of the enclosure 2.

Each evaporation compartment is preferably provided with an inflow liquid collecting container 32 arranged at the bottom of each evaporation compartment and intended to collect non-vaporized inflow liquid. The collecting container 32 comprises a level sensor configured to measure the level of inflow liquid and to generate a level signal when the liquid level deviates from a predetermined liquid level interval. Purified liquid collecting spaces 34 are provided between evaporation compartments for collecting purified liquid, and being delimited by sidewalls 8 of the adjacent evaporation compartments, and the inner surface of the enclosure.

In still a further embodiment, the steam produced by evaporation under partial vacuum is lead through the central tube 12, the steam conducting space 38, and the inner central tube 36 to the turbine for compression and subsequently recuperation of evaporation heat.

In an example of the relative sizes of some parts of the system, the inner diameter of the central tube 12 is in the range of 0.1-0.5 times of the outer diameter of the enclosure 2, and the inner diameter of a longitudinal pipe 10 is in the range of 0.01-0.1 times of the diameter of the central tube 12.

The second end 6 of the enclosure 2 may be provided with a delimitation wall 41 essentially parallel to the sidewall 8 of the evaporation compartment. The delimitation wall 41 is arranged to divide the space defined by the sidewall closest to the evaporation compartment and the outer wall of the enclosure into a second end liquid collecting space 42, closest to the evaporation compartment, and an alternative second end space 46. The central tube 12 opens into the second end liquid collecting space 42, and the inner central tube 36 opens into the alternative second end space 46.

The steam produced by evaporation under partial vacuum is lead through the inner central tube 36 to the low-pressure turbine region for initial compression and becomes, at a suitable pressure step inside the axial turbine; compounded with the high-pressure steam collected in second end liquid collecting space 42 and transported to that particular pressure step in the turbine via the steam conducting space 38, that ends immediately before the said compressor step.
Subsequently; both mass flows are combined pressurized by the remaining high-pressure region of the axial compressor and further compressed and lead to direction change of its kinetic energy, in the specially designed radial compressor, and lead through the horizontal pipes 10 for subsequent recuperation of the increased internal energy. The axial turbine vane members 16 are structured to protrude, at least partly, into the inner central tube 36 in order to help sustaining partial vacuum in the evaporation compartments E1-E3, facilitate the flow of steam from the second end 6 to the first end 4 of the enclosure and to bring the low-pressure steam up to practically the same energetic state as the highly pressurized residual steam exiting the horizontal tubes 10 after completing a full cycle of vaporization heat recuperation.
The kinetic energy of the compressed vapor is harvested in the last high-pressure manifold 42 (adjacent to the second end of the enclosure) and lead back to the turbine via the steam conducting space 38 in order to assist and promote rotation of the axial-/radial turbine and thereby increase system efficiency.
Preferably, the turbine, stators and surrounding walls inside the axial turbine assembly are made by a suitable 3D-printing technique, preferably from metallic or composite material, further preferably of thermoplastic nature, and optionally coated for higher resilience. The bearings (rolling element, sliding or hydrodynamic by fluid or gas) in a pivot point inside the inner central tube 36 and in the high pressure turbine compartment are foreseen to become lubricated, preferably with low-pressure steam, and their housing may become externally cooled.
The present invention also relates to a mechanical vapor recompression (MVR) liquid purification system comprising a compound turbine system as described above, and in particular an MVR water desalination system.

The present invention is not limited to the above-described preferred embodiments. Various alternatives, modifications and equivalents may be used. Therefore, the above embodiments should not be taken as limiting the scope of the invention, which is defined by the appending claims.

## Claims

1. A compound turbine system, comprising a pressure-tight enclosure (2) provided with a first end (4) and a second end (6), the enclosure has an essentially circular cylindrical elongated shape along a longitudinal axis A, and being essentially horizontally oriented during operation of the system, and a central tube (12) having an essentially circular cross-section and running within said enclosure (2) along said longitudinal axis A and configured to allow gaseous compounds to flow from the second end to the first end of the compound turbine system, **characterized in that** said compound turbine system further comprises:
- an inner central tube (36) arranged concentrically within said central tube (12) and running from said second end (6) towards the first end (4) to a predetermined position P a predetermined distance L from an opening of the central tube (12) at the first end (4), wherein said inner central tube (36) has an outer diameter related to the inner diameter of said central tube (12) such that a gaseous compounds conducting space (38) is provided between an outer surface of the inner central tube (36) and an inner surface of the central tube (12), and wherein said space (38) has a predetermined size in a radial direction of approximately 0.05-0.25 times the outer radius of the central tube (12),
- a turbine assembly (14) arranged in relation to said first end (4), comprising a turbine provided with axial turbine vane members (22) arranged within said central tube (12) and partly within said inner central tube (36) and structured to provide gaseous compounds to flow in an axial direction along the longitudinal axis A within said gaseous compounds conducting space (38), said inner central tube (36), and said central tube (12), from said second end (6) to said first end (4), and that the turbine assembly (14) comprises a motor (20) for rotating said turbine at a variable rotational speed and thereby provide said flow, wherein the flow within the gaseous compounds conducting space (38) and the flow within the central tube are combined into one flow at said predetermined position P.

2. The compound turbine system according to claim 1, wherein the axial turbine vane members (22) comprise two types of vane members, a first type arranged within said central tube (12) but not within said inner central tube (36), and a second type arranged within said inner central tube (36), wherein the first type of axial turbine vane members (22) have a larger radial extension in comparison to the radial extension of vane members of the second type.

3. The compound turbine system according to claim 1 or 2, wherein the outer diameter of said central tube (12) is essentially constant along the central tube between said first and second ends.

4. The compound turbine system according to claim 1 or 2, wherein the outer diameter of said central tube (12) has a first diameter D1 at the second end (6), and a second diameter D2 at the first end (4), wherein D1>D2, and that the diameter decreases gradually from D1 to D2 in a longitudinal section including said position P.

5. The compound turbine system according to any of claims 1-4, wherein said predetermined position P is determined in dependence of the pressures of the flows in the inner central tube (36) and in the conducting space (38) such that the pressures are essentially equal, i.e. differ less than 10%.

6. The compound turbine system according to any of claims 1-5, wherein the turbine is also provided with radial turbine vane members (40) structured to provide gaseous compounds to flow in essentially radial directions from the opening (18) at said first end (4) of said central tube (12).

7. The compound turbine system according to claim 6, wherein said radial turbine vane members (40) are concentrically arranged at said longitudinal axis A in close relation to the opening of the central tube (12) at the first end (4).

8. The compound turbine system according to any of claims 1-7, comprising numerous, particularly three, evaporation compartments E1-E3, arranged within said enclosure (2) along the longitudinal axis A, the first evaporation compartment E1 is arranged in relation to the first end (4) of the enclosure and the last evaporation compartment E3 is arranged in relation the second end (6) of the enclosure, the evaporation compartments are connected in series and have essentially circular cylindrical shapes, each evaporation compartment comprises of two essentially planar and circular sidewalls (8), and each evaporation compartment is provided with a plurality of longitudinal pipes (10) running from one sidewall (8) to the other sidewall (8), and that the circular sidewalls are provided with openings for said plurality of pipes,
wherein said central tube (12) is arranged to run along the longitudinal axis A of the enclosure (2) through the centers of said evaporation compartments E1-E3, and configured to allow steam to flow from the second end to the first end of the enclosure.

9. The compound turbine according to claim 8, comprising:
- a low vacuum generating member (23) arranged to generate partial vacuum in the evaporation compartments,
- a control unit (24) configured to control operation of the system according to designated performance, by performing a control procedure adapted to:
generate said partial vacuum in the evaporation compartments,
control said motor (20) to operate said turbine at a rotational speed such that an increased temperature is induced to the steam when passing said turbine to achieve desired recycling of specific heat associated to vaporization, and
control a plurality of valves and pumps provided to supply the system with inlet water and to receive purified liquid, e.g. water, from the system.

10. The compound turbine system according to claim 8 or 9, wherein the number of pipes (10) is highest in the first evaporation compartment E1, then gradually fewer in the second E2 and third E3, and wherein the pipes (10) are essentially evenly spread in a cross-section perpendicular to the longitudinal axis of the respective evaporation compartment, and the pipes are configured to allow steam to flow from the first end (4) to the second end (6) of the enclosure (2).

11. The compound turbine system according to any of claims 8-10, wherein a first end space (28) is provided, defined by the sidewall (8) of the first evaporation compartment E1 and the inner surface of the enclosure (2), wherein said first end inner surface has a symmetrical concave shape displaying a predetermined curve-form adapted to guide the steam flow in a radial direction and further into a direction essentially along the longitudinal axis A towards the second end (6) of the enclosure (2).

12. The compound turbine system according to any of claims 8-12, wherein purified liquid collecting spaces (34) are provided between evaporation compartments for collecting purified liquid, and being delimited by sidewalls (8) of the adjacent evaporation compartments, and the inner surface of the enclosure.

13. The compound turbine system according to any of claims 8-12, wherein the steam produced by evaporation under partial vacuum is lead through said central tube (12), said steam conducting space (38), and said inner central tube (36) to the turbine for compression and subsequently recuperation of evaporation heat.

14. A mechanical vapor recompression (MVR) liquid purification system comprising a compound turbine system according to any of claims 1-13, and in particular an MVR water desalination system,.
